# EUROPÄISCHE PATENTSCHRIFT

(11) **EP 1 455 068 B1**
(45) Veröffentlichungstag und Bekanntmachung des Hinweises auf die Patenterteilung: **17.12.2014**
(21) Anmeldenummer: 04003219.5
(22) Anmeldetag: 13.02.2004
(51) Int. Cl.: F02D 9/04

(54) **Abgasleitung einer Brennkraftmaschine mit steuerbaren Abgasklappen**
Exhaust line of an internal combustion engine having controllable exhaust flaps
Ligne d'échappement d'un moteur à combustion interne ayant des clapets d'échappement commandables

(30) Priorität: 03.03.2003 DE 10309468
(43) Veröffentlichungstag der Anmeldung: 08.09.2004
(73) Patentinhaber: Dr. Ing. h.c. F. Porsche AG, 70435 Stuttgart (DE)
(72) Erfinder: Held, Wolfgang, 71297 Mönsheim (DE); Rauner, Thomas, 89134 Blaustein (DE)

(56) Entgegenhaltungen:
- WO-A-99/15773
- DE-A1- 4 025 565
- DE-A1- 19 837 507

## Beschreibung

Die Erfindung betrifft eine Abgasleitung einer Brennkraftmaschine wie sie beispielsweise bereits aus der DE 42 12 215 bekannt ist. Bei dieser bekannten Anordnung ist die Abgasleitung einer Brennkraftmaschine mit einem motornahen angeordneten Startkatalysator versehen. Im Gehäuse des Startkatalysators ist ein von einem Katalysatorkörper umgebener Zentralkanal vorgesehen, der mittels einer Abgasklappe derart steuerbar ist, dass das Abgas bei verschlossener Klappe den Katalysatorkörper durchströmt und bei geöffneter Klappe durch den Zentralkanal hindurchgeleitet wird. Eine solche Anordnung wird häufig genutzt, um den Katalysator möglichst schnell auf Betriebstemperatur zu bringen.Ein weiteres Beispiel einer Brennkraftmaschine mit Steuerbaren Abgasklappen ist in DE-4025585 offenbart.

Bei der erfindungsgemässen Ansteuerung der Abgasklappe ist eine zweiflutige Abgasanlage mit je einem Vorkatalysator und je einem Hauptkatalysator vorgesehen. Die Vorkatalysatoren sitzen auch hier motornah direkt hinter den Krümmern und die Hauptkatalysatoren sind im Endschalldämpfer integriert. Bei den heutigen Fahrzeugen ist aufgrund der hohen Anforderungen oft nur ein minimaler Platz vorhanden, um die Abgasanlage zu integrieren. Deshalb werden bei den modernen Abgasanlagen, die trotz ihres geringen Schalldämpfervolumens alle gesetzlichen Geräuschgrenzwerte bei minimalem Abgasdruck und bei hoher Motorlast erfüllen sollen, der Schalldämpfer als Klappenendschalldämpfer konzipiert.
Entsprechend den Merkmalen des erfindungsgemässen Verfahrens sollen diese Abgasklappen in Abhängigkeit eines abgelegten Kennfeldes angesteuert werden. In das Kennfeld können die verschiedensten Parameter wie der Fahrpedalgradient, die Motortemperatur, die Lambdawerte etc. einfließen, wobei jedoch insbesondere die Fahrzeuggeschwindigkeit, die Motordrehzahl, der eingelegte Gang und die Motorlast als wesentliche Grössen für die Ansteuerung der Abgasklappen eingehen.

Durch diese erfindungsgemässe kennfeldabhängige Ansteuerung der Abgasklappen können deutliche Verbesserungen bei den Leistungsanforderungen in niedrigen Gängen erreicht werden. Ein weiterer Vorteil ergibt sich daraus, dass separate Kennfelder abgelegt werden können, die beispielsweise dem Fahrer entweder ein sehr sportliches Verhalten des Fahrzeuges vermitteln oder beispielsweise im Stadtverkehr ein eher komfortbetontes Fahrgeräusch und damit ruhiges Fahrverhalten vermitteln. Damit ergibt sich eine deutliche Komforterhöhung für den Fahrer des Fahrzeuges.

Die Vorrichtung mit dem erfindungsgemässen Verfahren ist in den Figuren dargestellt und im Folgenden näher erläutert.

Es zeigen
- Fig. 1: den Prinzipaufbau einer Klappenabgasanlage und
- Fig. 2: schematisch die einzelnen Verfahrensschritte für die Durchführung des erfindungsgemässen Verfahrens

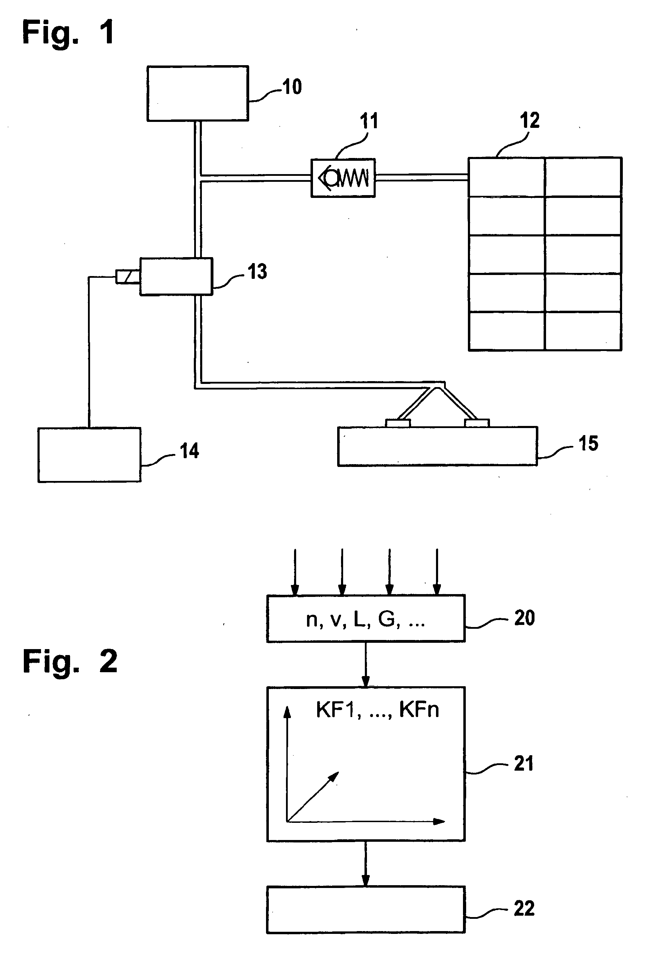

Die Fig. 1 zeigt eine Klappenabgasanlage im Prinzipaufbau. Mit dem Bezugszeichen 10 ist der Unterdruckspeicher bezeichnet. Der Unterdruckspeicher ist über ein Rückschlagventil 11 mit der Sauganlage 12 verbunden. Parallel dazu ist der Unterdruckspeicher mit einem Magnetventil 13 verbunden, welches vom Motorsteuergerät 14 angesteuert wird und dessen Ausgang an die Abgasanlage 15 geführt ist. Die Funktionsweise einer solchen Abgasanlage mit ansteuerbaren Abgasklappen ist im wesentlichen bekannt und soll im einzelnen hier nicht nochmals erläutert werden.

In Fig. 2 sind die wesentlichen Schritte zur Durchführung des erfindungsgemässen Verfahrens angegeben. In einem ersten Arbeitsschritt 20 werden die verschiedenen Eingangsgrössen für die Bestimmung des Ansteuervorgangs der Abgasklappen erfasst. Diese Eingangsgrössen sind beispielsweise die Drehzahl n, die Geschwindigkeit v, die Last L, der eingelegte Gang G und weitere mögliche Grössen wie Temperatur und Fahrerwunsch. In einem nachfolgenden Arbeitsschritt 21 werden anhand der erfassten Eingangsgrössen die Steuergrößen mit Hilfe mindestens eines abgelegten Kennfeldes für die Abgasklappen bestimmt. Hierbei ist es denkbar, dass auf verschiedene Kennfelder zugegriffen wird, welche alle im Motorsteuergerät 14 abgelegt sind. Mögliche Kennfelder für die Ansteuerung der Abgasklappen möglich sind im Arbeitsschritt 21 mit dem Kennfeld KF1 bis zum Kennfeld KFn deutlich gemacht. Sobald im Arbeitsschritt 21 die Schaltbedingungen für die Abgasklappen erfüllt sind, erfolgt im Arbeitsschritt 22 die Ausgabe eines Signals an das Magnetventil 13. Damit wird der Durchgang von einem Unterdruckspeicher zu den Unterdruckdosen der Abgasklappen freigegeben. Da der Unterdruckspeicher der Abgasanlage direkt über ein Rückschlagventil 11 mit der Sauganlage verbunden ist, wird bei laufendem Verbrennungsmotor und geschlossener Drosselklappe in der Sauganlage ein Unterdruck aufgebaut und der Unterdruckspeicher wird beaufschlagt. Der verwendete Unterdruckspeicher ist für die Ansteuerung nicht zwingend erforderlich. Die Abgasklappen können auch durch elektrische Stellmotoren direkt betätigt werden. Die Ansteuerung der Stellmotoren kann ebenfalls durch das Motorsteuergerät erfolgen.

Mit dieser erfindungsgemässen Ansteuerung der Abgasklappen, wobei nicht nur die Geschwindigkeit des Fahrzeuges, sondern die Gesamtanforderungen an den Motor und die Abgasanlage berücksichtigt werden, können ganz gezielt verschiedene Problematiken. So können störende Gaswechselgeräusche z.B. Dröhnen oder Brummen, die nur bei bestimmten Drehzahlen und Motorlasten auftreten durch eine gezielte Ansteuerung der Abgasklappen reduziert bzw. vollständig vermieden werden. Gleichzeitig ist es möglich, einen extrem sportlichen Sound über ein Kennfeld im Steuergerät abzulegen und so dem Fahrer ein Gefühl von extremer Agilität zu vermitteln.

Des Weiteren ist es möglich, bei Fahrzeugen die sowohl als Straßenfahrzeuge zugelassen sind als auch auf Rennstreckenbetrieb ausgelegt sind, durch Erkennung der abgeforderten Motorleistung und/oder des Drehmomentes den Rennbetrieb zu erkennen. Hierdurch können Abgasklappenkennfelder ausgewählt werden, welche auf Leistungs- und Drehmomentenoptimum bedatet sind.

## Patentansprüche

1. Verfahren der Ansteuerung der Abgasklappen in einer Abgasanlage, wobei ein Unterdruckspeicher (10) über ein Rückschlagventil (11) mit einer Sauganlage (12) verbunden ist, wobei der Unterdruckspeicher parallel dazu über ein ansteuerbares Magnetventil (13) mit der Abgasanlage (15) verbunden ist und wobei das ansteuerbare Magnetventil von einem Motorsteuergerät (14) ansteuerbar ist, wobei im Motorsteuergerät (14) mehrere Kennfelder abgelegt sind, und wobei die Abgasklappen in Abhängigkeit mindestens eines wählbaren Kennfeldes, welches sich über Drehzahlgeschwindigkeit, Motorlast und eingelegten Gang erstreckt, geöffnet oder geschlossen werden,

2. Abgasanlage nach Anspruch 1, **dadurch gekennzeichnet, dass** im Steuergerät aus den gespeicherten Kennfeldern, je nach vorgebbarer Anforderung das entsprechende Kennfeld ausgewählt wird.

3. Abgasanlage nach Anspruch 2, **dadurch gekennzeichnet, dass** durch die Kennfeldauswahl zwischen Betrieb als Straßenfahrzeug und einem Rennstreckenbetrieb umgeschaltet wird.

## Claims

1. Method for actuating the exhaust flaps in an exhaust system, wherein a vacuum accumulator (10) is connected to a suction system (12) via a non-return valve (11), wherein the vacuum accumulator is connected in parallel therewith to the exhaust system (15) via an actuable solenoid valve (13), and wherein the actuable solenoid valve can be actuated by an engine control device (14), wherein a plurality of characteristic diagrams are stored in the engine control device (14), and wherein the exhaust flaps are opened or closed as a function of at least one selectable characteristic diagram which extends over the rotational speed, engine load and engaged gear speed.

2. Exhaust system according to Claim 1, **characterized in that** the corresponding characteristic diagram is selected from the stored characteristic diagrams in the control device depending on the predefinable request.

3. Exhaust system according to Claim 2, **characterized in that** shifting occurs between an operating mode as a road vehicle and a race track operating mode by means of the selection of the characteristic diagram.

## Revendications

1. Procédé de commande des clapets d'échappement dans un système d'échappement, un réservoir à dépression (10) étant relié à un système d'aspiration (12) par le biais d'une soupape anti-retour (11), le réservoir à dépression étant, parallèlement à cela, relié au système d'échappement (15) par le biais d'une électrovanne commandable (13), et l'électrovanne commandable pouvant être commandée par un appareil de commande de moteur (14), plusieurs champs caractéristiques étant mis en mémoire dans l'appareil de commande de moteur (14), et les clapets d'échappement étant ouverts ou fermés en fonction d'au moins un champ caractéristique sélectionnable, lequel porte sur la vitesse de rotation, la charge du moteur et le rapport enclenché.

2. Système d'échappement selon la revendication 1, **caractérisé en ce qu'**en fonction d'une demande pouvant être prédéfinie, le champ caractéristique correspondant peut être sélectionné dans l'appareil de commande à partir des champs caractéristiques mémorisés.

3. Système d'échappement selon la revendication 2, **caractérisé en ce qu'**au moyen de la sélection de champ caractéristique, on commute entre un fonctionnement en tant que véhicule routier et un fonctionnement sur autodrome.
